# EUROPÄISCHE PATENTSCHRIFT

(11) **EP 4 193 406 B1**
(45) Veröffentlichungstag und Bekanntmachung des Hinweises auf die Patenterteilung: **03.01.2024**
(21) Anmeldenummer: 22700085.8
(22) Anmeldetag: 10.01.2022
(51) Int. Cl.: H01M 8/04119, H01M 8/04291, H01M 8/04492, H01M 8/04537, H01M 8/04746, H01M 8/04858

(54) **VERFAHREN ZUM BETREIBEN EINER BRENNSTOFFZELLENVORRICHTUNG, BRENNSTOFFZELLENVORRICHTUNG SOWIE KRAFTFAHRZEUG MIT EINER BRENNSTOFFZELLENVORRICHTUNG**
METHOD OF OPERATING A FUEL CELL SYSTEM, FUEL CELL SYSTEM, AND VEHICLE WITH FUEL CELL SYSTEM
PROCÉDÉ D'OPÉRATION D'UN DISPOSITIF DE PILE À COMBUSTIBLE, DISPOSITIF DE PILE À COMBUSTIBLE ET VÉHICULE AVEC DISPOSITIF DE PILE À COMBUSTIBLE

(30) Priorität: 12.01.2021 DE 102021100345
(43) Veröffentlichungstag der Anmeldung: 14.06.2023
(73) Patentinhaber: AUDI AG, 85057 Ingolstadt (DE)
(72) Erfinder: DISSON, Sebastian, 68753 Waghäusel (DE); LIPHARDT, Leonard, 74535 Mainhardt (DE); SUEMATSU, Keigo, 74172 Neckarsulm (DE)
(74) Vertreter: Hentrich Patent- & Rechtsanwaltspartnerschaft mbB
(86) Internationale Anmeldenummer: PCT/EP2022/050296
(87) Internationale Veröffentlichungsnummer: WO 2022/152632

(56) Entgegenhaltungen:
- GB-A- 2 518 680
- US-A1- 2016 240 875
- LIU DENGCHENG ET AL: "Localised electrochemical impedance spectroscopy investigation of polymer electrolyte membrane fuel cells using Print circuit board based interference-free system", APPLIED ENERGY, ELSEVIER SCIENCE PUBLISHERS, GB, Bd. 254, 9. August 2019 (2019-08-09), XP085839772, ISSN: 0306-2619, DOI: 10.1016/J.APENERGY.2019.113712 [gefunden am 2019-08-09]

## Beschreibung

Die Erfindung betrifft ein Verfahren zum Betreiben einer einen Brennstoffzellenstapel mit mindestens einer Brennstoffzelle aufweisenden Brennstoffzellenvorrichtung, umfassend die Schritte:
a) Trocknen des Brennstoffzellenstapels bei einem Abstellen der Brennstoffzellenvorrichtung,
b) Bestimmung des Membranrestwassers und des Kathodenrestwasser mittels der elektrochemischen Impedanzspektroskopie bei einem Neustart der Brennstoffzellenvorrichtung,
c) Nutzung einer Zellspannungsüberwachungseinheit zur Identifizierung der feuchtesten Kathode in einer der Brennstoffzellen,
d) modellbasierte Bestimmung des Wassertransports von der feuchtesten Kathode zu der Anode und damit der Anodenfeuchte in dieser Brennstoffzelle,
e) Einstellung des elektrischen Stromes und des Brennstoffvolumenstromes in Abhängigkeit der Anodenfeuchte.

Die Erfindung betrifft weiterhin eine Brennstoffzellenvorrichtung sowie ein Kraftfahrzeug mit einer Brennstoffzellenvorrichtung.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektrodenanordnung, die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff (H₂) oder ein wasserstoffhaltiges Gasgemisch der Anode zugeführt, wo eine elektrochemische Oxidation von H₂ zu H⁺ unter Abgabe von Elektronen stattfindet. Über die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²- unter Aufnahme der Elektronen stattfindet. Gleichzeitig reagieren im Kathodenraum diese Sauerstoffanionen mit den über die Membran transportierten Protonen unter Bildung von Wasser. Dieses Wasser muss aus der Brennstoffzelle und dem Brennstoffzellenstapel herausgeführt werden, bis ein Feuchteniveau erreicht ist, das zum Betrieb des Brennstoffzellensystems erforderlich ist.

Brennstoffzellenvorrichtungen benötigen daher ein sorgfältiges Wassermanagement, da es zum Einen erforderlich ist zu verhindern, dass zu viel Wasser sich in der Brennstoffzelle bzw. in dem Brennstoffzellenstapel befindet, was zu einer Blockade der Strömungskanäle für die Versorgung mit den Reaktanten führt. Befindet sich andererseits zu wenig Wasser in der Brennstoffzelle, ist die Protonenleitfähigkeit der Membran begrenzt, sodass auf eine ausreichende Feuchte und Wasserversorgung der Membran geachtet werden muss.

Problematisch ist es, wenn bei einem Start der Brennstoffzellenvorrichtung Frostbedingungen vorliegen, also Bedingungen, bei denen Wasser gefriert. Dies kann dazu führen, dass die erforderlichen Strömungskanäle für die Reaktantengase und das Produktwasser durch Eis blockiert sind. Die daraus resultierende Gefahr ist eine Wasserstoffverarmung, die zu irreversiblen Schäden im Elektrodenmaterial führt.

Verhindert werden kann eine Wasserstoffverarmung, indem die minimale Wasserstoffstöchiometrie an jedem Ort innerhalb des Brennstoffzellenstapels bei 1 gehalten wird, wozu die Parameter des elektrischen Stromes und des Gasvolumenstromes zur Verfügung stehen. Damit diese Parameter richtig eingestellt werden können, muss der Restwassergehalt in der feuchtesten Anode bestimmt werden, bevor ein elektrischer Strom dem Brennstoffzellenstapel entnommen wird.

Der Restwassergehalt auf der Anodenseite setzt sich zusammen aus dem Anodenrestwasser, dem Membranrestwasser und dem Kathodenrestwasser. Es ist bekannt, beim Abstellen der Brennstoffzellenvorrichtung, insbesondere bei drohenden Froststartbedingungen, den Brennstoffzellenstapel zu trocknen. Auf diese Weise kann der Anodenrestwassergehalt ausreichend niedrig gehalten werden. Allerdings erfolgt noch eine Diffusion des Membranrestwassers und des Kathodenrestwasser auf die Anodenseite und führt dort erneut zu Anodenrestwasser.

Die EP 3 588 648 A1 verweist gleichfalls darauf, dass das Feuchteniveau einer Brennstoffzelle deren Betriebsweise stark beeinflusst. Das Feuchteniveau korreliert mit der elektrochemischen Impedanz, so dass durch deren Messung das Feuchtniveau bestimmt und geregelt werden kann. Eine Zellspannungsüberwachungseinheit (Cell Voltage Monitor CVM) wird zur Überwachung der elektrischen Spannung jeder einzelnen Brennstoffzelle in dem Brennstoffzellenstapel genutzt. Auch die WO 2015/044683 A1 beschreibt, wie die elektrochemische Impedanzspektroskopie und eine Zellspannungsüberwachungseinheit zur Überwachung des Zustands des Brennstoffzellenstapels eingesetzt werden. Die elektrochemische Impedanzspektroskopie wird in der DE 10 2013 225 626 A1 genutzt zum Diagnostizieren eines Fehlers innerhalb eines Brennstoffzellenstapels.

Aufgabe der vorliegenden Erfindung ist es, ein Verfahren für die Bestimmung des Anodenrestwassers insbesondere zur Vorbereitung eines Froststartes einer Brennstoffzellenvorrichtung bereitzustellen und die Möglichkeit von dessen Durchführung zu bieten.

Diese Aufgabe wird durch ein Verfahren mit den Merkmalen des Anspruchs 1, durch eine Brennstoffzellenvorrichtung mit den Merkmalen des Anspruchs 8 und durch ein Kraftfahrzeug mit den Merkmalen des Anspruchs 9 gelöst. Vorteilhafte Ausgestaltungen mit zweckmäßigen Weiterbildungen der Erfindung sind in den abhängigen Ansprüchen angegeben.

Durch das erfindungsgemäße Verfahren ist erreicht, dass nicht nur ein mittlerer Restwassergehalt der gesamten Brennstoffzellenstapels bestimmt werden kann, sondern der Restwassergehalt der feuchtesten Kathode, von dem ausgehend die Diffusion auf die Anode modellbasiert, mit einem Wassertransportmodell bestimmt wird, so dass auch die Restwassermenge in der feuchtesten Anode bekannt ist und dazu die passenden Parameter für den Neustart der Brennstoffzellenvorrichtung bestimmt werden können.

Die Genauigkeit des Wassertransportmodells wird verbessert, wenn die modellbasierte Bestimmung des Wassertransports die Außentemperatur bei dem Neustart und/oder die Außentemperatur bei dem Abstellen und/oder die Standzeit zwischen dem Abstellen und dem Neustart berücksichtigt.

Wenn im Schritt e) die minimale Wasserstoffstöchiometrie für die Brennstoffzelle mit der feuchtesten Kathode auf 1 gehalten wird, dann ist sichergestellt, dass keine Wasserstoffverarmung auch bei der am stärksten gefährdeten Brennstoffzelle auftritt.

Zweckmäßigerweise wird über eine High Frequency Resistance (HFR) der Wassergehalt der Membran und/oder über eine Low Frequency Resistance (LFR) der Wassergehalt der Kathodenelektrode bestimmt.

Die vorstehend genannten Vorteile und Wirkungen gelten sinngemäß auch für eine Brennstoffzellenvorrichtung und für ein Kraftfahrzeug mit einer Brennstoffzellenvorrichtung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer Brennstoffzellenvorrichtung,
- Fig. 2: eine schematische Darstellung des temperaturgetriebenen Wassertransports von der Kathode zur Anode in einem Brennstoffzellenstapel, mit einer symbolisierten Temperaturskala auf der rechten Seite, hell eine niedrige Temperatur symbolisierend,
- Fig. 3: eine schematische Darstellung eines Nyquist-Plots zur Erläuterung der High Frequency Resistance (HFR) und der Low Frequency Resistance (LFR), gezeigt für LFR bei 200 Hz (Dreieck) und HFR bei 1000 Hz (Quadrat),
- Fig. 4: eine schematische Darstellung zur Erläuterung, welche Komponente einer Membran-Elektrodenanordnung mit HFR und LFR gemessen wird, und
- Fig. 5: eine schematische Darstellung einer Korrelationskurve zur Impedanzabhängigkeit der Wassermasse für HRF (gepunktet) und LFR (gestrichelt).

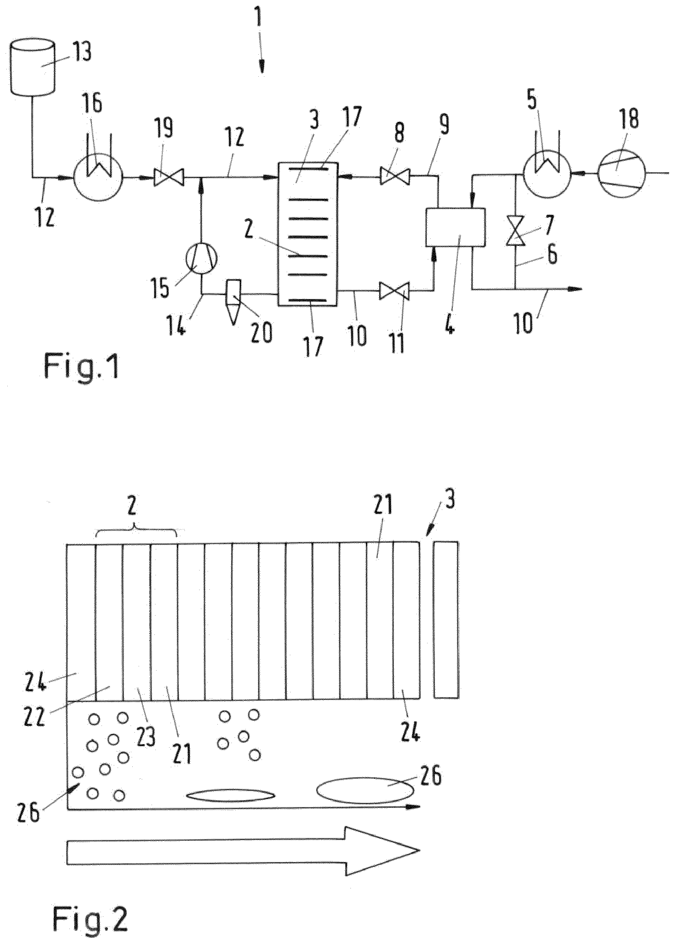

In der Figur 1 ist schematisch eine Brennstoffzellenvorrichtung 1 gezeigt, wobei diese eine Mehrzahl von in einem Brennstoffzellenstapel 3 zusammengefasster Brennstoffzellen 2 umfasst.

Jede der Brennstoffzellen 2 umfasst eine Anode 21, eine Kathode 22 sowie eine die Anode 21 von der Kathode 22 trennende, protonenleitfähige Membran 23. Über einen Anodenraum kann der Anode 21 Brennstoff (zum Beispiel Wasserstoff) aus einem Brennstofftank 13 zugeführt werden. In einer Polymerelektrolytmembranbrennstoffzelle (PEM-Brennstoffzelle) werden an der Anode 21 Brennstoff oder Brennstoffmoleküle in Protonen und Elektronen aufgespaltet. Die PEM lässt die Protonen hindurch, ist aber undurchlässig für die Elektronen. An der Anode erfolgt beispielsweise die Reaktion: 2H₂ → 4H⁺ + 4e⁻ (Oxidation/Elektronenabgabe). Während die Protonen durch die PEM zur Kathode 22 hindurchtreten, werden die Elektronen über einen externen Stromkreis an die Kathode 22 oder an einen Energiespeicher geleitet.

Über einen Kathodenraum kann der Kathode 22 das Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻→ 2H₂O (Reduktion/Elektronenaufnahme).

Da in dem Brennstoffzellenstapel 3 mehrere Brennstoffzellen 2 zusammengefasst sind, muss eine ausreichend große Menge an Kathodengas zur Verfügung gestellt werden, so dass durch einen Verdichter 18 ein großer Kathodengasmassenstrom oder Frischgasstrom bereitgestellt wird, wobei infolge der Komprimierung des Kathodengases sich dessen Temperatur stark erhöht. Die Konditionierung des Kathodengases oder des Frischluftgasstroms, also dessen Einstellung hinsichtlich der im Brennstoffzellenstapel 3 gewünschten Temperatur und Feuchte 26, erfolgt in einem dem Verdichter 18 nachgelagerten Ladeluftkühler 5 und einem diesem nachgelagerten Befeuchter 4, der eine Feuchtesättigung der Membranen 23 der Brennstoffzellen 2 zur Steigerung von deren Effizienz bewirkt, da dies den Protonentransport begünstigt.

Um bei einem Neustart einer Brennstoffzellenvorrichtung 1 unter Frostbedingungen Blockaden durch gefrorenes Wasser einzelner Kanäle für die Reaktantenversorgung oder von Brennstoffzellen 2 mit der damit verbundenen Gefahr einer Wasserstoffunterversorgung und daraus folgender irreversibler Schäden im Elektrodenmaterial zu vermeiden, wird ein Verfahren durchgeführt, das beginnt bei dem Abstellen der Brennstoffzellenvorrichtung 1 mit einem
a) Trocknen des Brennstoffzellenstapels 3, so dass der Restwassergehalt der Anoden 21 sehr niedrig eingestellt werden kann und bekannt ist.
   Daran schließt sich dann bei einem Neustart der Brennstoffzellenvorrichtung 1 an die
b) Bestimmung des Membranrestwassers und des Kathodenrestwasser mittels der elektrochemischen Impedanzspektroskopie,
c) Nutzung einer Zellspannungsüberwachungseinheit zur Identifizierung der feuchtesten Kathode 22 in einer der Brennstoffzellen 2,
d) modellbasierte Bestimmung des Wassertransports von der feuchtesten Kathode 22 zu der Anode 21 und damit der Anodenfeuchte in dieser Brennstoffzelle 2, und
e) Einstellung des elektrischen Stromes und des Brennstoffvolumenstromes in Abhängigkeit der Anodenfeuchte.

Durch geeignete Wahl des von dem Brennstoffzellenstapel 2 entnommenen elektrischen Stromes und des dem Brennstoffzellenstapel 2 zugeführten Wasserstoffvolumenstromes kann so eine Wasserstoffunterversorgung auch der Brennstoffzelle 2 mit der feuchtesten Anode 21 vermieden werden, woraus sich dann ergibt, dass auch die anderen Anoden 21 in dem Brennstoffzellenstapel 3 ausreichend versorgt werden. Dazu wird im Schritt e) die minimale Wasserstoffstöchiometrie für die Brennstoffzelle 2 mit der feuchtesten Kathode auf 1 gehalten.

Figur 2 verweist darauf, dass der durch den Pfeil symbolisierte Wassertransport von der Kathode 22 auf die Anode 21 temperaturabhängig ist, wobei die randseitigen Brennstoffzellen 2 nahe der Endplatten 24 des Brennstoffzellenstapels 3 stärker Temperaturänderungen ausgesetzt sind. Für die modellbasierte Bestimmung des Wassertransports mit einer verbesserten Genauigkeit wird die Außentemperatur bei dem Neustart berücksichtigt, ebenso wie die Außentemperatur bei dem Abstellen und die Standzeit zwischen dem Abstellen und dem Neustart.

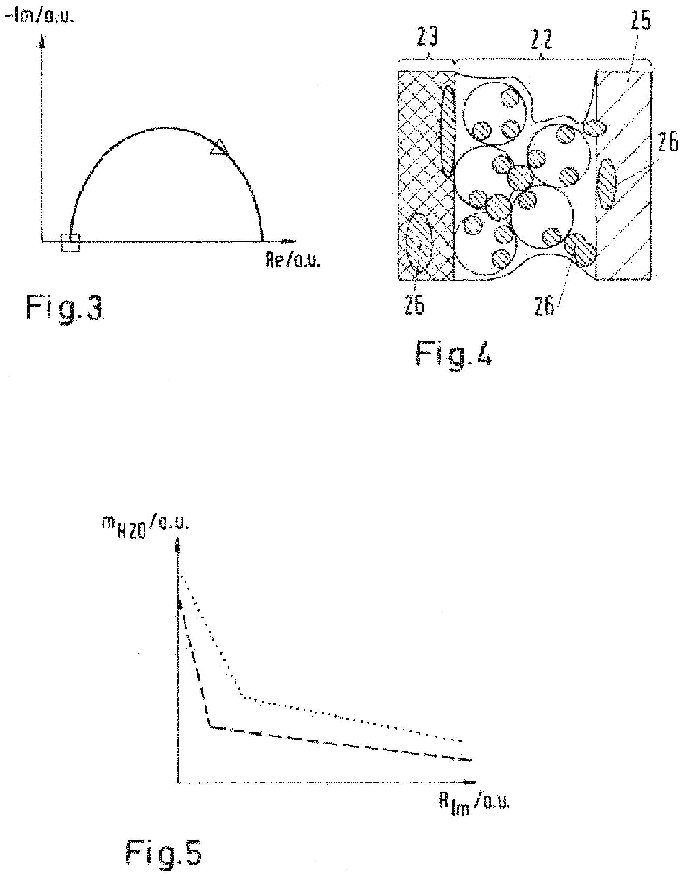

Der Wassergehalt, also die Feuchte 26 der Membran 23 wird über eine High Frequency Resistance (HFR) und der Wassergehalt, also die Feuchte der Kathodenelektrode über eine Low Frequency Resistance (LFR) bestimmt (Figur 4), wobei die Figur 5 die Korrelation zwischen der Wassermenge und der HFR beziehungsweise LFR anzeigt.

Die Brennstoffzellenvorrichtung 1 verfügt über ein Steuergerät, das eingerichtet ist zur Durchführung des vorstehend genannten Verfahrens, wobei die Brennstoffzellenvorrichtung 1 auch in einem Kraftfahrzeug verwendet werden kann.

### BEZUGSZEICHENLISTE:

- 1: Brennstoffzellenvorrichtung
- 2: Brennstoffzelle
- 3: Brennstoffzellenstapel
- 4: Befeuchter
- 5: Ladeluftkühler
- 6: Bypassleitung
- 7: Befeuchter-Bypassventil
- 8: Frischluftdosierventil
- 9: Frischluftleitung
- 10: Kathodenabgasleitung
- 11: Kathodenabgasventil
- 12: Brennstoffleitung
- 13: Brennstofftank
- 14: Rezirkulationsleitung
- 15: Rezirkulationsgebläse
- 16: Wärmetauscher
- 17: Randzelle
- 18: Verdichter
- 19: Brennstoffdosierventil
- 20: Wasserabscheider
- 21: Anode
- 22: Kathode
- 23: Membran
- 24: Endplatte
- 25: Gasdiffusionslage
- 26: Feuchte

## Patentansprüche

1. Verfahren zum Betreiben einer einen Brennstoffzellenstapel (3) mit mindestens einer Brennstoffzelle (2) aufweisenden Brennstoffzellenvorrichtung (1), umfassend die Schritte:
a) Trocknen des Brennstoffzellenstapels (3) bei einem Abstellen der Brennstoffzellenvorrichtung (1),
b) Bestimmung des Membranrestwassers und des Kathodenrestwasser mittels der elektrochemischen Impedanzspektroskopie bei einem Neustart der Brennstoffzellenvorrichtung (1),
c) Nutzung einer Zellspannungsüberwachungseinheit zur Identifizierung der feuchtesten Kathode (22) in einer der Brennstoffzellen (2),
d) modellbasierte Bestimmung des Wassertransports von der feuchtesten Kathode (22) zu der Anode (21) und damit der Anodenfeuchte in dieser Brennstoffzelle (2),
e) Einstellung des elektrischen Stromes und des Brennstoffvolumenstromes in Abhängigkeit der Anodenfeuchte.

2. Verfahren nach Anspruch 1, **dadurch gekennzeichnet, dass** die modellbasierte Bestimmung des Wassertransports die Außentemperatur bei dem Neustart berücksichtigt.

3. Verfahren nach Anspruch 1 oder 2, **dadurch gekennzeichnet, dass** die modellbasierte Bestimmung des Wassertransports die Außentemperatur bei dem Abstellen berücksichtigt.

4. Verfahren nach einem der Ansprüche 1 bis 3, **dadurch gekennzeichnet, dass** die modellbasierte Bestimmung des Wassertransports die Standzeit zwischen dem Abstellen und dem Neustart berücksichtigt.

5. Verfahren nach einem der Ansprüche 1 bis 4, **dadurch gekennzeichnet, dass** im Schritt e) die minimale Wasserstoffstöchiometrie für die Brennstoffzelle (2) mit der feuchtesten Kathode (22) auf 1 gehalten wird.

6. Verfahren nach einem der Ansprüche 1 bis 5, **dadurch gekennzeichnet, dass** über eine High Frequency Resistance (HFR) der Wassergehalt der Membran (23) bestimmt wird.

7. Verfahren nach einem der Ansprüche 1 bis 6, **dadurch gekennzeichnet, dass** über eine Low Frequency Resistance (LFR) der Wassergehalt der Kathode (22) bestimmt wird.

8. Brennstoffzellenvorrichtung (1) mit einem Steuergerät, das eingerichtet ist zur Durchführung eines Verfahrens nach einem der Ansprüche 1 bis 7.

9. Kraftfahrzeug mit einer Brennstoffzellenvorrichtung (1) nach Anspruch 8.

## Claims

1. A method for operating a fuel cell device (1) having a fuel cell stack (3) with at least one fuel cell (2), comprising the steps:
a) drying the fuel cell stack (3) at a shutdown of the fuel cell device (1),
b) determining the residual membrane water and the residual cathode water by means of electrochemical impedance spectroscopy at a restart of the fuel cell device (1),
c) use of a cell voltage monitoring unit to identify the wettest cathode (22) in one of the fuel cells (2),
d) model-based determination of the water transport from the wettest cathode (22) to the anode (21) and thus the anode moisture in this fuel cell (2),
e) adjustment of the electric current and the fuel volume flow as a function of the anode moisture.

2. The method according to claim 1, **characterized in that** the model-based determination of the water transport takes into account the outside temperature at the restart.

3. The method according to claim 1 or 2, **characterized in that** the model-based determination of the water transport takes into account the outside temperature at the shutdown.

4. The method according to any of claims 1 to 3, **characterized in that** the model-based determination of the water transport takes into account the standing time between the shutdown and the restart.

5. The method according to any one of claims 1 to 4, **characterized in that** in step e) the minimum hydrogen stoichiometry for the fuel cell (2) with the wettest cathode (22) is kept at 1.

6. The method according to any on of claims 1 to 5, **characterized in that** the water content of the membrane (23) is determined via a high frequency resistance (HFR).

7. The method according to any one of claims 1 to 6, **characterized in that** the water content of the cathode (22) is determined via a low frequency resistance (LFR).

8. A fuel cell device (1) comprising a controller arranged to perform a method according to any one of claims 1 to 7.

9. Motor vehicle with a fuel cell device (1) according to claim 8.

## Revendications

1. Procédé d'opération d'un dispositif de pile à combustible (1) présentant un empilement de piles à combustible (3) avec au moins une pile à combustible (2), comprenant les étapes de :
a) séchage de l'empilement de piles à combustible (3) lorsque le dispositif de pile à combustible (1) est arrêté,
b) détermination de l'eau résiduelle de membrane et de l'eau résiduelle de cathode par spectroscopie d'impédance électrochimique lors d'un redémarrage du dispositif de pile à combustible (1),
c) utilisation d'une unité de surveillance de la tension des piles pour identifier la cathode (22) la plus humide dans l'une des piles à combustible (2),
d) détermination basée sur un modèle du transport d'eau de la cathode (22) la plus humide jusqu'à l'anode (21) et ainsi de l'humidité de l'anode dans cette pile à combustible (2),
e) réglage du courant électrique et du débit volumique de combustible en fonction de l'humidité de l'anode.

2. Procédé selon la revendication 1, **caractérisé en ce que** la détermination basée sur un modèle du transport d'eau tient compte de la température extérieure lors du redémarrage.

3. Procédé selon la revendication 1 ou 2, **caractérisé en ce que** la détermination basée sur un modèle du transport d'eau tient compte de la température extérieure lors de l'arrêt.

4. Procédé selon l'une quelconque des revendications 1 à 3, **caractérisé en ce que** la détermination basée sur un modèle du transport d'eau tient compte du temps d'arrêt entre l'arrêt et le redémarrage.

5. Procédé selon l'une quelconque des revendications 1 à 4, **caractérisé en ce qu'**à l'étape e), la stoechiométrie minimale en hydrogène pour la pile à combustible (2) avec la cathode (22) la plus humide est maintenue à 1.

6. Procédé selon l'une quelconque des revendications 1 à 5, **caractérisé en ce que** la teneur en eau de la membrane (23) est déterminée par le biais d'une résistance haute fréquence (HFR).

7. Procédé selon l'une quelconque des revendications 1 à 6, **caractérisé en ce que** la teneur en eau de la cathode (22) est déterminée par le biais d'une résistance basse fréquence (LFR).

8. Dispositif de pile à combustible (1) avec un appareil de commande qui est configuré pour mettre en oeuvre un procédé selon l'une quelconque des revendications 1 à 7.

9. Véhicule automobile avec un dispositif de pile à combustible (1) selon la revendication 8.
